# EUROPÄISCHE PATENTSCHRIFT

(11) **EP 2 655 820 B1**
(45) Veröffentlichungstag und Bekanntmachung des Hinweises auf die Patenterteilung: **17.05.2017**
(21) Anmeldenummer: 11781749.4
(22) Anmeldetag: 07.11.2011
(51) Int. Cl.: F01N 3/035, F01N 3/08, F01N 3/10, F01N 3/20, F01N 3/28, F01N 13/00

(54) **ABGASANLAGE MIT HC-ADSORBER UND PARALLELEM ABGASKATALYSATOR SOWIE FAHRZEUG MIT EINER SOLCHEN ABGASANLAGE**
EXHAUST SYSTEM WITH HC ADSORBER AND PARALLEL EXHAUST-GAS CATALYTIC CONVERTER, AND VEHICLE HAVING AN EXHAUST SYSTEM OF SAID TYPE
SYSTÈME D'ÉCHAPPEMENT AVEC ADSORBEUR D'HYDROCARBURES ET CATALYSEUR DE GAZ D'ÉCHAPPEMENT PARALLÈLE AINSI QUE VÉHICULE ÉQUIPÉ D'UN TEL SYSTÈME D'ÉCHAPPEMENT

(30) Priorität: 24.12.2010 DE 102010056281
(43) Veröffentlichungstag der Anmeldung: 30.10.2013
(73) Patentinhaber: Volkswagen Aktiengesellschaft, 38440 Wolfsburg (DE)
(72) Erfinder: DEGEN, Alf, 38536 Meinersen (DE); SEILER, Valeri, 29399 Wahrenholz (DE)
(74) Vertreter: Gulde & Partner
(86) Internationale Anmeldenummer: PCT/EP2011/005583
(87) Internationale Veröffentlichungsnummer: WO 2012/084091

(56) Entgegenhaltungen:
- DE-A1- 19 709 432
- JP-A- 2 173 312
- US-A- 5 582 003
- US-A- 5 966 929
- US-A1- 2006 123 772
- US-B1- 6 334 304

## Beschreibung

Die Erfindung betrifft eine Abgasanlage mit einem HC-Adsorber sowie ein Fahrzeug, welches eine solche aufweist.

Der Einsatz von Katalysatoren in den Abgasanlagen von Verbrennungsmotoren ist heute selbstverständlich. Beispielsweise werden insbesondere bei Dieselmotoren Oxidationskatalysatoren eingesetzt, welche unverbrannte Kohlenwasserstoffe (HC) sowie Kohlenmonoxid (CO) konvertieren, und ebenfalls bei Dieselmotoren und Ottomotoren Reduktionskatalysatoren, die Stickoxide (NOₓ) umsetzen. Darüber hinaus sind Drei-Wege-Katalysatoren bekannt, welche die Funktion von Oxidations- und Reduktionskatalysatoren vereinen und somit alle drei Komponenten katalytisch umsetzen und hauptsächlich bei Ottomotoren eingesetzt werden. Grundsätzlich benötigen sämtliche Katalysatoren eine spezifische Mindesttemperatur, die Light-off- oder Anspringtemperatur, bei der sie 50 % der limitierten Abgaskomponenten konvertieren. Nach einem Kaltstart des Motors ist diese Temperatur üblicherweise noch nicht erreicht, so dass, wenn keine weiteren Maßnahmen ergriffen werden, die als Startemissionen bezeichneten Emissionen unkonvertiert die Abgasanlage verlassen.

Heutige und erst recht zukünftige Abgasgesetzgebungen erfordern, dass die in standardisierten Fahrzyklen gemessenen Startemissionen zur Bestimmung der Gesamtemissionen eines Fahrzeugs mit erfasst werden. Der Wunsch nach einer weiteren Reduzierung von Emissionen sowie die zunehmend niedriger werdenden Abgasgrenzwerte erfordern auch die Reduzierung der Startemissionen und somit das frühere Erreichen der Betriebstemperaturen des Katalysatorsystems.

Eine verbreitete Maßnahme zur Reduzierung der Startemissionen ist die motornahe Anordnung relativ kleinvolumiger Vorkatalysatoren, die auch als Startkatalysatoren bezeichnet werden. Aufgrund ihres geringen Volumens und ihrer motornahen Platzierung erreichen Vorkatalysatoren relativ schnell ihre Light-off-Temperatur und übernehmen dann die Konvertierung eines Großteils der Emissionen, bis auch ein nachgeschalteter Hauptkatalysator seine Betriebstemperatur erreicht hat.

Aus DE 100 21 421 A1 ist eine Abgasanlage bekannt, bei der eine Abgasturbine eines Abgasturboladers in einer Hauptleitung des Abgaskanals angeordnet ist und diese von einer parallel geführten Bypassleitung umgehbar ist. In der Bypassleitung ist ein als Drei-Wege-Katalysator oder als HC-Adsorber ausgestalteter Vorkatalysator angeordnet. Ein steuerbare Klappe kann wechselseitig die Bypassleitung oder die Hauptleitung verschließen, wobei auch Zwischenstellungen vorgesehen sein können. Nach einem Kaltstart wird zunächst der gesamte Abgasstrom durch die Bypassleitung über den Vorkatalysator geleitet. Sobald ein nachgeschalteter Hauptkatalysator seine Anspringtemperatur erreicht hat, wird die Klappe umgelegt und der Abgasstrom über die Abgasturbine in der Hauptleitung geleitet.

US 2002/0132726 A1 beschreibt ein Abgasanlage, die einen Hauptkatalysator aufweist sowie stromab von diesem zwei parallele Abgasleitungen, die mittels eines Umklappventils wahlweise verschlossen bzw. geöffnet werden können. Die zwei parallelen Abgasleitungen haben eine konzentrische Anordnung mit einer innen liegenden Hauptleitung und einer diese konzentrisch umschließende Nebenleitung, in welcher ein ringförmiger HC-Adsorber angeordnet ist. Aus der Nebenleitung stromauf des HC-Adsorbers zweigt eine Rückführungsleitung ab, welche unverbrannte und aus dem Adsorber desorbierte Kohlenwasserstoffe dem Verbrennungsmotor zuführt. Nach einem Kaltstart wird die innen liegende Hauptleitung verschlossen und der Abgasstrom über den HC-Adsorber geleitet, der die unverbrannten und von dem noch nicht betriebsbereiten Hauptkatalysator nicht umgesetzten Kohlenwasserstoffe HC absorbiert und/oder chemisorbiert. Sobald der Hauptkatalysator seine Betriebstemperatur erreicht hat und somit eine ausreichende HC-Konvertierung sicherstellt, wird der Abgasstrom in die Hauptleitung gelenkt. Aufgrund der nun stattfindenden Erwärmung desorbieren die Kohlenwasserstoffe vom HC-Adsorber und werden über die Rückführungsleitung der motorischen Verbrennung zugeführt.

Es ist ferner ein ähnliches Konzept bekannt, das ebenfalls die konzentrische Struktur aus außen liegendem HC-Adsorber und innen liegender Hauptleitung verwendet, wobei in diesem Konzept der Hauptkatalysator jedoch nicht vorgeschaltet sondern dem HC-Adsorber nachgeschaltet ist. In dieser Aufbau entfällt die in US 2002/0132726 A1 beschriebene Rückführungsleitung. Vielmehr werden die desorbierten Kohlenwasserstoffe von dem nachgeschalteten Hauptkatalysator umgesetzt.

US 2006/0123772 A1 beschreibt eine Abgasanlage mit einem Abgasweg, der eine Hautleitung und eine Nebenleitung aufweist, die zueinander koaxial angeordnet sind. In der Nebenleitung ist ein HC-Adsorber angeordnet und ein Stellmittel dient der selektiven Leitung eines Abgasstroms in die Haupt- oder Nebenleitung. In einem Einmündungsbereich der Nebenleitung in eine gemeinsame Abgasleitung stromab des HC-Adsorbers sind Einmündungsöffnungen vorgesehen. Bei geöffnetem Stellmittel, bei der die Haupt- und die Nebenleitung geöffnet sind und der Hauptanteil des Abgasstroms durch die Hauptleitung strömt, ist der Abgasdruck stromab der Öffnungen größer ist als stromauf des Adsorbers, so dass ein Rückstrom des Abgases durch den Adsorber erfolgt, um freigesetztes HC mit dem Abgashauptstrom zu vermischen.

Ein ähnlicher Aufbau mit zwei koaxialen Abgasleitungen ist in US 5,966,929 beschrieben, wobei zusätzlich zu dem in der Nebenleitung angeordneten HC-Adsorber in der zentralen Hauptleitung ein Katalysator angeordnet ist. Ein vorgeschalteter Strömungsumlenker, lenkt in seinem aktiven Zustand (Stellung bei Kaltstart) beide Abgasteilströme durch die Nebenleitung und in seinem inaktiven Zustand einen Teilstrom durch die Hauptleitung und den anderen Teilstrom durch die Nebenleitung. Es besteht jedoch kein Möglichkeit den gesamten Abgasstrom durch die zentrale Hauptleitung zu lenken.

Der Erfindung liegt die Aufgabe zugrunde, den zuvor genannten Stand der Technik dahingehend weiterzuentwickeln, dass sichergestellt ist, dass im Warmbetrieb des Systems bei geöffnetem Stellmittel der Abgasstrom zumindest hauptanteilig durch den in der Hauptleitung angeordneten Katalysator strömt.

Diese Aufgabe wird durch eine Abgasanlage sowie ein Fahrzeug mit den Merkmalen der unabhängigen Ansprüche gelöst.

Die erfindungsgemäße Abgasanlage für einen Verbrennungsmotor umfasst einen Abgasweg, der zumindest abschnittsweise zwei parallele Abgasleitungen aufweist, nämlich eine Hauptleitung sowie eine Nebenleitung. Dabei ist in der Nebenleitung ein HC-Adsorber zur reversiblen Adsorption unverbrannter Kohlenwasserstoffe (HC) und in der den HC-Adsorber umgehenden Hauptleitung ein Abgaskatalysator zur Konvertierung zumindest einer Abgaskomponente angeordnet. Ferner ist ein Stellmittel zur selektiven Leitung eines Abgasstroms durch die Hauptleitung und/oder durch die Nebenleitung jeweils in Richtung von einem Einlass zu einem Auslass der Abgasanlage vorgesehen. Die Abgasanlage umfasst ferner einen stromab der parallelen Abgasleitungen im Abgasweg angeordneten gemeinsamen Hauptkatalysator. Die erfindungsgemäße Abgasanlage zeichnet sich dadurch aus, dass ein Einmündungsbereich der Nebenleitung in eine gemeinsame Abgasleitung zumindest eine Einmündungsöffnung aufweist, welche so ausgelegt ist, dass bei einer Stellung des Stellmittels, bei der die Hauptleitung und die Nebenleitung geöffnet sind, zumindest ein Hauptanteil des Abgasstroms durch die Hauptleitung strömt.

Hierdurch wird sichergestellt, dass im Warmbetrieb des Systems, wenn beide parallelen Abgasleitungen geöffnet sind, der Abgasstrom zumindest hauptanteilig die Hauptleitung mit dem darin befindlichen Bypass-Katalysator durchströmt. Je geringer der Öffnungsquerschnitt der Einmündungsöffnung der Nebenleitung, desto größer ist an dieser Stelle der Strömungswiderstand und damit die Tendenz, die Hauptleitung zu wählen.

Durch die Anordnung eines Abgaskatalysators in derjenigen der parallelen Abgasleitungen, die den HC-Adsorber nicht enthält, das heißt in der den HC-Adsorber umgehenden Leitung ("Bypass-Leitung") wird einerseits erreicht, dass der nachgeschaltete Hauptkatalysator durch die exotherme Reaktion des erfindungsgemäß vorgeschalteten Abgaskatalysators seine Betriebstemperatur schneller erreicht und die Startemissionen somit reduziert werden. Zudem wird der zur Verfügung stehende Bauraum optimal genutzt, da die gemäß Stand der Technik "leere" Hauptleitung der Aufnahme eines Katalysatorelements dient.

Der in der Haupt- oder Bypass-Leitung angeordnete Abgaskatalysator wird nachfolgend auch als Bypass-Katalysator bezeichnet.

Dabei wird im Rahmen der vorliegenden Erfindung der Begriff "parallele Abgasleitungen" nicht notwendigerweise im geometrischen Sinn verstanden, sondern strömungstechnisch, indem die beiden Abgasleitungen alternative Strömungswege für den Abgasstrom darstellen.

In bevorzugter Ausführung ist der in der Hauptleitung angeordnete Abgaskatalysator (Bypass-Katalysator) als Drei-Wege-Katalysator ausgestaltet, das heißt er unterstützt die katalytische Konvertierung von unverbrannten Kohlenwasserstoffen (HC), Kohlenmonoxid (CO) sowie von Stickoxiden (NOₓ). Zu diesem Zweck kann seine katalytische Beschichtung die Edelmetalle Platin, Palladium und/oder Rhodium enthalten, insbesondere eine Kombination aus Platin und Rhodium oder Palladium und Rhodium. Desgleichen kann auch der nachgeschaltete Hauptkatalysator ein Drei-Wege-Katalysator sein und eine katalytische Beschichtung gemäß vorstehender Beschreibung aufweisen.

Insbesondere bei gleicher Art der Katalysatoren kann mit Vorteil vorgesehen sein, dass eine Summe der Konvertierungskapazitäten des Hauptkatalysators und des Bypass-Katalysators sowie eines gegebenenfalls vorhandenen Vorkatalysators so eingerichtet ist, dass diese Gesamtkonvertierungskapazität eine vorbestimmte Gesamtkonvertierungsleistung erfüllt, insbesondere in einem definierten, standarisierten Fahrzyklus, vorzugsweise im gesamten, also sämtliche Betriebspunkte abdeckenden Motorkennfeld. Mit anderen Worten verteilt sich die Gesamtkonvertierungsleistung auf Haupt- und Bypass-Katalysator und gegebenenfalls Vorkatalysator. Dies hat den Vorteil, dass das Volumen und/oder die Edelmetallbeladung des Hauptkatalysators gegenüber dem Stand der Technik, in dem kein Bypass-Katalysator vorgesehen ist, kleiner gewählt werden kann. Durch das kleinere Volumen kann der zur Verfügung stehende Bauraum besser und flexibler genutzt werden.

Ein Katalysatorträger (auch Substrat genannt) des Bypass-Katalysators kann zwar grundsätzlich ein keramischer Träger sein (Monolith), es ist jedoch bevorzugt, dass dieser als Metallträger ausgeführt ist, insbesondere in Form von gewickelten Metallfolien. Die Verwendung eines Metallträgers hat einerseits fertigungstechnische Vorteile, da ein Zusammenbau durch Schweißen und Löten möglich ist. Andererseits gestatten Metallfolien die Darstellung besonders vorteilhafter Strömungscharakteristika. So können Wandungen des Metallkatalysatorträgers beziehungsweise der Metallfolien eines solchen Durchgangsöffnungen aufweisen, wodurch der Abgasgegendruck beziehungsweise der Strömungswiderstand gesenkt wird und auch Querströmungen des Abgases möglich sind. In diesem Zusammenhang können beispielsweise ausgestanzte (perforierte) Metallfolien für den Metallträger Einsatz finden. Noch bevorzugter ist allerdings vorgesehen, dass Metallfolien mit geklinkten Durchgangsöffnungen verwendet werden, bei denen kleine Teilbereiche der Folie nicht vollständig ausgestanzt und damit entfernt werden, sondern nur entlang eines Teils ihrer Kontur ausgestanzt und dann zur einen oder anderen Seite der Folie aufgebogen werden, vorzugsweise wechselseitig. Geklinkte Metallfolien (auch LS-Folien genannt) haben gegenüber perforierten Folien (PE-Folien) den Vorteil, dass keine katalytische Oberfläche durch das Stanzen verloren geht. Typischerweise besitzen geklinkte Metallfolien eine um 30 bis 35 % größere Oberfläche und damit katalytische Fläche als perforierte Folien. Zudem ist der radiale Wärme- und Stoffübergang geklinkter Folien größer als bei perforierten.

Nach einer weiteren bevorzugten Ausgestaltung weisen die parallelen Abgasleitungen einen Aufbau auf, bei dem eine der parallelen Abgasleitungen die andere zumindest abschnittsweise umschließt. Dies kann besonders bevorzugt eine konzentrische (koaxiale) Anordnung sein, bei der beide Leitungen einen gemeinsamen Mittelpunkt beziehungsweise eine gemeinsame Zentralachse aufweisen. Vorteil dieser Ausgestaltung ist eine optimale Bauraumnutzung. In diesem Zusammenhang kann insbesondere die den HC-Adsorber beherbergende Nebenleitung die den Bypass-Katalysator beherbergende Hauptleitung umschließen. Hierdurch wird eine gute thermische Isolierung des Bypass-Katalysators erreicht, wodurch dieser nach einem Kaltstart besonders schnell erwärmt wird.

Nach einer weiteren vorteilhaften Ausgestaltung weist das Stellmittel zur selektiven Leitung des Abgasstroms in die Hauptleitung und/oder in die Nebenleitung neben einer geschlossenen Stellung und einer geöffneten Stellung Zwischenstellungen auf. Indem somit das Stellmittel nicht als 2-Punkt-Element mit den Stellungen AUF und ZU ausgeführt ist, sondern auch Zwischenstellungen möglich sind, in denen ein variabler Teil des Abgasstroms über den HC-Adsorber und der andere Teil über den Bypass-Katalysator geführt wird, kann die Oberfläche beziehungsweise das Volumen des nachgeschalteten Hauptkatalysators noch weiter verringert werden.

In einer besonderen Ausführung der Erfindung ist vorgesehen, dass das Stellmittel lediglich eingangsseitig der Hauptleitung vorgesehen ist und in seiner geschlossenen Stellung die Hauptleitung verschließt und in einer geöffneten Stellung die Hauptleitung öffnet. Die fertigungstechnische Realisierung einer solchen Ausgestaltung ist besonders einfach und lässt sich besonders günstig in Kombination mit der konzentrischen Ausführung der parallelen Abgasleitungen realisieren.

Insbesondere im Zusammenhang mit der vorstehend beschriebenen Ausführung des Stellmittels sind neben dem erfindungsgemäß ausgestalteten Einmündungsbereich der den Adsorber beherbergenden Nebenleitung in den Abgaskanal weitere Maßnahmen vorteilhaft, die sicherstellen, dass im Warmbetrieb des Systems, wenn beide parallelen Abgasleitungen geöffnet sind, der Abgasstrom zumindest hauptanteilig die Hauptleitung mit dem darin befindlichen Bypass-Katalysator durchströmt.

Hauptanteil des Abgasstroms durch die Hauptleitung strömt. Je geringer der Öffnungsquerschnitt der Einmündungsöffnung der Nebenleitung, desto größer ist an dieser Stelle der Strömungswiderstand und damit die Tendenz, die Hauptleitung zu wählen.

Als eine weitere Maßnahme in diesem Zusammenhang kann vorgesehen sein, dass eine Zellzahl des Bypass-Katalysators kleiner ist als eine Zellzahl des HC-Adsorbers. Auch hierdurch wird ein geringerer Strömungswiderstand im Katalysator erzielt, der seine Durchströmung bei geöffnetem Stellmittel gegenüber dem Adsorber begünstigt.

Nach einer weiteren bevorzugten Ausführung sind die parallelen Abgasleitungen mit dem HC-Adsorber und dem Bypasskatalysator sowie der nachgeschaltete Hauptkatalysator in einem gemeinsamen Gehäuse angeordnet, das insbesondere an einer Unterbodenposition eines Fahrzeugs angeordnet sein kann.

Ein weiterer Aspekt der vorliegenden Erfindung betrifft ein Fahrzeug, das die erfindungsgemäße Abgasanlage aufweist. Das Fahrzeug weist vorzugsweise einen Ottomotor auf. Bypass- und Hauptkatalysator sind in diesem Fall vorzugsweise als Drei-Wege-Katalysatoren ausgebildet.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch eine Abgasanlage gemäß der vorliegenden Erfindung;
- Figur 2: einen Ausschnitt der Abgasanlage nach Figur 1 mit einer erfindungsgemäßen Katalysatoreinheit mit geöffnetem Stellmittel und
- Figur 3: den Ausschnitt nach Figur 2 mit geschlossenem Stellmittel.

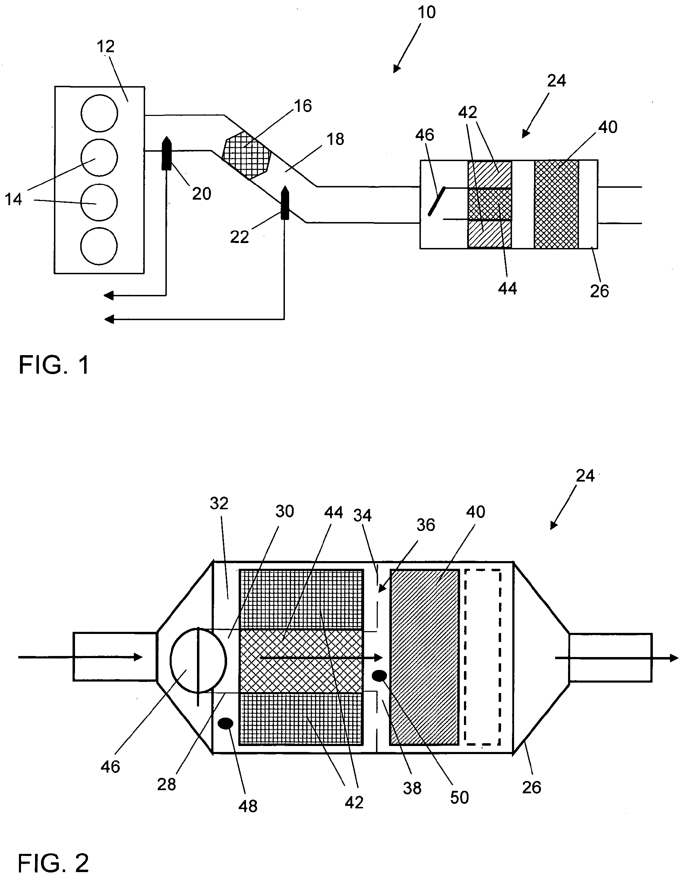

Figur 1 zeigt eine Überblicksansicht einer erfindungsgemäßen Abgasanlage 10.

Das Abgas eines Verbrennungsmotors 12, beispielsweise eines Ottomotors, tritt über Abgasauslasse seiner Zylinder 14 zunächst in einen nicht dargestellten Abgaskrümmer ein. An einer motornahen Position, insbesondere unmittelbar an den Abgaskrümmer anschließend, kann ein kleinvolumiger Vorkatalysator 16 angeordnet sein, der die Funktion eines Startkatalysators erfüllt, indem er nach einem Kaltstart des Verbrennungsmotors sich sehr schnell erwärmt und die Hauptkonvertierungsleistung nach seinem Light-off nach Motorstart bis zu einem Anspringen eines nachgeschalteten Konverters übernimmt. Je nach Art des Verbrennungsmotors kann der Vorkatalysator ein Oxidations- oder ein Drei-Wege-Katalysator sein. Der Vorkatalysator 14 ist beispielsweise über eine Flanschverbindung mit einem Abgasrohr 18 verbunden.

An einer motornahen Position stromauf des Vorkatalysators 14 ist eine erste Lambdasonde 20 angeordnet, die einen Sauerstoffgehalt des Rohabgases des Motors misst und in bekannter Weise der Regelung des Luft-Kraftstoff-Gemischs des Motors dient. Weiter kann stromab des Vorkatalysators 16 eine zweite Lambdasonde 22 vorgesehen sein. Die zweite Lambdasonde 22 kann verschiedene Funktionen erfüllen. Beispielsweise kann sie der Diagnose des Vorkatalysators 16 dienen, dem Abgleich der Sonden untereinander und/oder der Gemischregelung.

Das Abgasrohr 18 ist mit seinem ausgangsseitigem Ende an eine Katalysatoreinheit 24 angeschlossen, die nachfolgend anhand von Figur 2 näher erläutert wird.

Die Katalysatoreinheit 24 weist im vorliegenden Beispiel ein gemeinsames Katalysatorgehäuse 26 auf. In einem eingangsseitigen Abschnitt des Katalysatorgehäuses 26 ist ein konzentrisches Innenrohr 28 angeordnet, so dass sich der Abgasweg in diesem Abschnitt in zwei parallele Abgasleitungen aufspaltet, nämlich eine innen liegende Hauptleitung 30 sowie eine ringförmige, die Hauptleitung 30 umhüllende Nebenleitung 32. An einem Einmündungsbereich 34 werden die parallelen Abgasleitungen 30, 32 wieder zusammengeführt. Der Einmündungsbereich 34 ist im dargestellten Beispiel als eine kragenförmige Aufweitung des Innenrohrs 28 ausgebildet und weist eine Mehrzahl von Einmündungsöffnungen 36 auf, durch welche das Abgas der Nebenleitung 32 in eine gemeinsame Abgasleitung 38 strömt.

Die Katalysatoreinheit 24 enthält verschiedene Abgasreinigungskomponenten. So ist stromab der parallelen Abgasleitungen 30, 32 und des Einmündungsbereichs 34 ein Hauptkatalysator 40 in der gemeinsamen Abgasleitung 38 angeordnet, der insbesondere eine Drei-Wege-katalytische Beschichtung aufweist und somit der Konvertierung von unverbrannten Kohlenwasserstoffen HC, Kohlenmonoxid CO sowie Stickoxiden NOₓ dient. Ferner ist in der Nebenleitung 32 ein ringförmiger HC-Adsorber 42 angeordnet. Der HC-Adsorber 42 kann einen keramischen, aus fertigungstechnischen Gründen jedoch bevorzugt metallischen Trägerkörper ausweisen sowie eine Zeolith-Beschichtung, welche unverbrannte Kohlenwasserstoffe HC adsorptiv und/oder chemisorptiv zu binden vermag und bei erhöhten Temperaturen wieder desorbiert. Geeignete HC-Adsorber 42 sind dem Fachmann bekannt und bedürfen keiner näheren Erläuterung.

Erfindungsgemäß ist zudem in der, den HC-Adsorber 42 umgehenden Hauptleitung 30 ein Abgaskatalysator 44 zur Konvertierung zumindest einer Abgaskomponente angeordnet, welcher insbesondere vom gleichen Katalysatortyp wie der nachgeschaltete Hauptkatalysator 40 ist, im vorliegenden Beispiel also ein Drei-Wege-Katalysator. Vorzugsweise weist der Abgaskatalysator 44 ebenso wie der HC-Adsorber 42 einen Metallträger auf, der aus gewickelten Metallfolien hergestellt ist. Nach ihrer separaten Beschichtung der Metallträger mit einem Zeolithen im Falle des HC-Adsorbers 42 beziehungsweise mit einer Drei-Wege-Beschichtung im Falle des Katalysators 44 können die Komponenten einzeln eingesetzt und verlötet oder verschweißt werden.

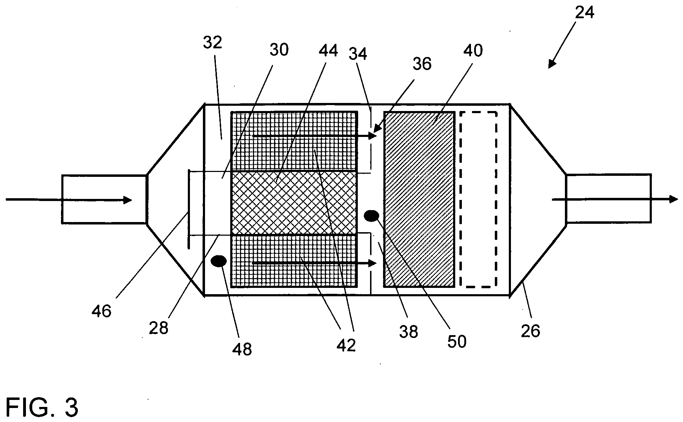

Die Katalysatoreinheit 24 weist ferner ein Stellmittel 46 zur selektiven Umleitung des Abgasstroms in die Hauptleitung 30 und/oder in die Nebenleitung 32 auf. Das Stellmittel 46 ist im vorliegenden Beispiel als eine an einer Achse drehbar gelagerte Klappe ausgestaltet, welche eingangsseitig an dem Innenrohr 28 angeordnet ist und zwischen einer geöffneten Stellung, die in Figur 2 dargestellt ist und einer in Figur 3 gezeigten geschlossenen Stellung durch einen geeigneten Aktuator bewegt werden kann. In der geschlossenen Stellung nach Figur 3 verschließt die Klappe die Hauptleitung 30, so dass der Abgasstrom durch die Nebenleitung 32 und über den HC-Adsorber 42 geführt wird. In der in Figur 2 gezeigten geöffneten Stellung sind sowohl die Hauptleitung 30 als auch die Nebenleitung 32 geöffnet. Um in diesem Fall den Abgasstrom zumindest hauptanteilig durch den Abgaskatalysator 44 zu leiten, können verschiedene, weiter unten erläuterte Vorkehrungen getroffen sein. Vorzugsweise ist das Stellmittel zudem in Zwischenstellungen schaltbar, so dass der Abgasstrom anteilig in die Hauptleitung 30 und in die Nebenleitung 32 geleitet werden kann.

Um bei geöffnetem Stellmittel 46 den Abgasstrom zumindest hauptanteilig durch die Hauptleitung 30 über den darin angeordneten Katalysator 44 zu leiten, werden Maßnahmen getroffen, die einen Abgasgegendruck in der Hauptleitung 30 gegenüber dem Abgasgegendruck in der Nebenleitung 32 relativ klein gestalten. Insbesondere wird in diesem Zusammenhang eine Zellzahl pro Querschnittsfläche des Katalysators 44 kleiner gewählt als eine Zellzahl des HC-Adsorbers 42. Beispielsweise weist der Katalysator 44 eine Zellzahl im Bereich von 200 bis 300 cpsi (cells per square inch) auf und der Adsorber 42 im Bereich von 300 bis 600 cpsi. Ferner wird erfindungsgemäß die Abgasströmung zusätzlich durch eine geeignete Auslegung der Einmündungsöffnungen 36 beeinflusst, wobei mit kleineren Öffnungsquerschnitten der Abgasgegendruck erhöht und der Abgasstrom durch die Hauptleitung 30 gezwungen wird. Schließlich kann durch Verwendung einer Durchgangsöffnungen aufweisenden Metallfolie für den Katalysatorträger des Abgaskatalysators 44, vorzugsweise einer geklinkten Metallfolie, der Gegendruck des Katalysators 44 verringert werden.

Zur Steuerung des Stellmittels 46 und damit zur Leitung des Abgasstroms über den HC-Adsorber 42 und/oder über den Abgaskatalysator 44 sind an den in Figur 2 mit 48 und 50 bezeichneten Positionen, also stromauf des HC-Adsorbers 42 sowie in der gemeinsamen Abgasleitung 38 stromauf des Hauptkatalysators 40 Temperatursensoren angeordnet. Die Sensoren 48, 50 messen die Abgastemperatur und lassen somit Rückschlüsse auf die Temperaturen des HC-Adsorbers 42 beziehungsweise des Hauptkatalysators 40 zu. Denkbar ist auch die Temperatursensoren direkt in den entsprechenden Komponenten zu installieren.

Die in den Figuren 1 bis 3 dargestellte Abgasanlage 10 zeigt folgende Funktion.

Nach einem Kaltstart des Verbrennungsmotors, wenn die Katalysatoren 16, 44 und 40 ihre Betriebstemperatur noch nicht aufweisen, ist das Stellmittel 46 vor der Hauptleitung 30 zunächst geschlossen (Figur 3), so dass der gesamte Abgasstrom durch den HC-Adsorber 42 strömt. Dieser speichert die im Abgas enthaltenen Kohlenwasserstoffe, die in den ersten Sekunden nach Motorstart den nicht betriebsbreiten Vorkatalysator 16 unkonvertiert passieren, ein. Die Größe des Adsorbers 42 ist so ausgelegt, dass die Kohlenwasserstoffe so lange vollständig gespeichert werden können, bis der Vorkatalysator 16 seine Light-off-Temperatur erreicht hat und ihre Konvertierung übernimmt.

Hat der Vorkatalysator 16 diese Temperatur erreicht, was durch eine Modellierung oder mittels des Temperatursensors 48 erkannt werden kann, wird das Stellmittel 46 geöffnet, so dass das heiße Abgas über den Abgaskatalysator 44 strömt und diesen erwärmt (Figur 2). Sobald der Abgaskatalysator 44 seine Light-off-Temperatur erreicht, beschleunigt sich aufgrund der Exothermie der Konvertierungsreaktionen seine weitere Erwärmung. Außerdem strömt das so durch den Abgaskatalysator 44 erwärmte Abgas in den Hauptkatalysator 40 und führt zu dessen Aufheizung.

Wird mittels des Temperatursensors 50 erkannt, dass auch der Hauptkatalysator 40 seine Anspringtemperatur erreicht hat, wird das Stellmittel 46 wieder teilweise oder vollständig geschlossen (Figur 3), so dass der gesamte beziehungsweise ein bestimmter Anteil des Abgasstroms über den HC-Adsorber 42 geführt wird und diesen erwärmt. Sobald der Adsorber seine Desorptionstemperatur erreicht hat, werden die gespeicherten Kohlenwasserstoffe freigesetzt und strömen durch die Einmündungsöffnungen 36 in die gemeinsame Abgasleitung 38 und in den Hauptkatalysator 40, wo sie zu CO₂ und H₂O umgesetzt werden.

Insgesamt wird durch die Anordnung des Abgaskatalysators 44 die Erwärmung des nachgeschalteten Hauptkatalysators 40 und sein Anspringen nach einem Kaltstart deutlich beschleunigt. Gegenüber dem Stand der Technik, in dem die Hauptleitung 30 als katalysatorfreies Rohr ausgeführt ist, wird somit eine insgesamt schnellere Betriebsbereitschaft des gesamten Systems erreicht.

Die Volumina und/oder die Edelmetallbeladungen des Abgaskatalysators 44 und des Hauptkatalysators 40 und - sofern vorgesehen - des Vorkatalysators 16 sind so ausgelegt, dass die Summe ihrer Konvertierungsleistungen im gesamten Betriebskennfeld des Motors eine vorbestimmte, ausreichende und hohe Gesamtkonvertierungsleistung erfüllt. Dies bedeutet, dass auch in entsprechenden Hochgeschwindigkeitsphasen des Fahrzyklus die limitierten Abgaskomponenten zumindest entsprechend den Vorgaben konvertiert werden müssen. Außerdem muss der Hauptkatalysator 40 in der Desorptionsphase des HC-Adsorbers 42 in der Lage sein, die desorbierten Kohlenwasserstoffe umzusetzen. Dies gestattet gegenüber einem analogen System, bei dem kein Abgaskatalysator 44 in der Hauptleitung 30 vorgesehen ist, den Hauptkatalysator 40 kleiner zu dimensionieren, da der Abgaskatalysator 44 zusätzliche Oberfläche mit katalytischer Aktivität bereitstellt. Im Extremfall kann, sofern der Vorkatalysator 16 und der Abgaskatalysator 44 zusammen ausreichend Konvertierungsleistung im Fahrzyklus aufbringen, der Hauptkatalysator 40 so bemessen sein, dass er lediglich die in der Desorptionsphase freigesetzten Kohlenwasserstoffe umsetzt. In diesem Fall kann auch eine reine Oxidationsfunktion des Hauptkatalysators 40 ausreichend sein. Das gegenüber einer Ausführung ohne Abgaskatalysator 44 eingesparte Katalysatorvolumen des Hauptkatalysators 40 ist durch einen mit einer unterbrochenen Linie markierten Bereich hinter dem Hauptkatalysator 40 in Figur 2 angedeutet. Die Erfindung ermöglicht somit eine bessere und flexiblere Bauraumausnutzung.

### Bezugszeichenliste

- 10: Abgasanlage
- 12: Verbrennungsmotor
- 14: Zylinder
- 16: Vorkatalysator
- 18: Abgasrohr
- 20: erste Lambdasonde
- 22: zweite Lambdasonde
- 24: Katalysatoreinheit
- 26: Katalysatorgehäuse
- 28: Innenrohr
- 30: Hauptleitung
- 32: Nebenleitung
- 34: Einmündungsbereich
- 36: Einmündungsöffnungen
- 38: gemeinsame Abgasleitung
- 40: Hauptkatalysator
- 42: HC-Adsorber
- 44: Abgaskatalysator
- 46: Stellmittel
- 48: Temperatursensor
- 50: Temperatursensor

## Patentansprüche

1. Abgasanlage (10) für einen Verbrennungsmotor, mit
- einem Abgasweg, der zumindest abschnittsweise zwei parallele Abgasleitungen (30, 32) aufweist, nämlich eine Hauptleitung (30) sowie eine Nebenleitung (32),
- einem in der Nebenleitung (32) angeordneten HC-Adsorber (42) zur reversiblen Adsorption unverbrannter Kohlenwasserstoffe (HC),
- einem in der Hauptleitung (30) angeordneten Abgaskatalysator (44) zur Konvertierung zumindest einer Abgaskomponente ;
- einem Stellmittel (46) zur selektiven Leitung eines Abgasstroms durch die Hauptleitung (30) und/oder durch die Nebenleitung (32) jeweils in Richtung von einem Einlass zu einem Auslass der Abgasanlage (10),
- einem stromab der parallelen Abgasleitungen (30, 32) angeordneten Hauptkatalysator (40),
**dadurch gekennzeichnet, dass** ein Einmündungsbereich (34) der Nebenleitung 32) in eine gemeinsame Abgasleitung (38) zumindest eine Einmündungsöffnung (36) aufweist, welche so ausgelegt ist, dass bei einer Stellung des Stellmittels (46), bei der die Hauptleitung (30) und die Nebenleitung 32) geöffnet sind, zumindest ein Hauptanteil des Abgasstroms durch die Hauptleitung (30) strömt.

2. Abgasanlage (10) nach Anspruch 1, **dadurch gekennzeichnet, dass** der in der Hauptleitung (30) angeordnete Abgaskatalysator (44) ein Drei-Wege-Katalysator ist.

3. Abgasanlage (10) nach einem der vorhergehenden Ansprüche, **dadurch gekennzeichnet, dass** der Hauptkatalysator (40) ein Drei-Wege-Katalysator ist.

4. Abgasanlage (10) nach einem der vorhergehenden Ansprüche, **dadurch gekennzeichnet, dass** eine Summe der Konvertierungskapazitäten des Hauptkatalysators (40) und des in der Hauptleitung (30) angeordneten Abgaskatalysators (44) sowie eines gegebenenfalls vorhandenen Vorkatalysators (16) so eingerichtet ist, dass sie eine vorbestimmte Gesamtkonvertierungsleistung erfüllt, insbesondere im gesamten Motorkennfeld.

5. Abgasanlage (10) nach einem der vorhergehenden Ansprüche, **dadurch gekennzeichnet, dass** der in der Hauptleitung (30) angeordnete Abgaskatalysator (44) einen Metallkatalysatorträger aufweist, dessen Wandungen Durchgangsöffnungen aufweisen, insbesondere ausgestanzte und/oder geklinkte Durchgangsöffnungen.

6. Abgasanlage (10) nach einem der vorhergehenden Ansprüche, **dadurch gekennzeichnet, dass** die parallelen Abgasleitungen (30, 32) einen Aufbau aufweisen, in dem eine der parallelen Abgasleitungen (30, 32) die andere der parallelen Abgasleitungen (30, 32) zumindest abschnittsweise umschließt, insbesondere einen konzentrischen Aufbau.

7. Abgasanlage (10) Anspruch 6, **dadurch gekennzeichnet, dass** die den HC-Adsorber (42) beherbergende Nebenleitung (32) die Hauptleitung (30) umschließt.

8. Abgasanlage (10) nach einem der vorhergehenden Ansprüche, **dadurch gekennzeichnet, dass** das Stellmittel (46) zur selektiven Leitung des Abgasstroms in die Hauptleitung (30) und/oder in die Nebenleitung (32) neben einer geschlossenen Stellung und einer geöffneten Stellung Zwischenstellungen aufweist.

9. Abgasanlage (10) nach einem der vorhergehenden Ansprüche, **dadurch gekennzeichnet, dass** das Stellmittel (46) lediglich im Bereich der Hauptleitung (30) vorgesehen ist und in einer geschlossenen Stellung die Hauptleitung (30) verschließt und in einer geöffneten Stellung die Hauptleitung (30) öffnet.

10. Abgasanlage (10) nach einem der vorhergehenden Ansprüche, **dadurch gekennzeichnet, dass** eine Zellzahl des in der Hauptleitung (30) angeordneten Abgaskatalysators (44) kleiner ist als eine Zellzahl des HC-Adsorbers (42).

11. Abgasanlage (10) nach einem der vorhergehenden Ansprüche, **dadurch gekennzeichnet, dass** die parallelen Abgasleitungen (30, 32) mit dem HC-Adsorber (42) und dem Abgaskatalysator (44) sowie der nachgeschaltete Hauptkatalysator (40) in einem gemeinsamen Katalysatorgehäuse (26) angeordnet sind.

12. Fahrzeug mit einem Verbrennungsmotor und einer diesem angeschlossenen Abgasanlage (10) nach einem der Ansprüche 1 bis 11.

## Claims

1. Exhaust system (10) for an internal combustion engine, having
- an exhaust path which has, at least in certain sections, two parallel exhaust lines (30, 32), specifically a main line (30) and a secondary line (32),
- an HC adsorber (42) which is arranged in the secondary line (32) and has the purpose of reversibly adsorbing unburnt hydrocarbons (HC),
- an exhaust gas catalytic converter (44) which is arranged in the main line (30) and has the purpose of converting at least one exhaust gas component;
- an actuator means (46) for selectively conducting an exhaust gas flow through the main line (30) and/or through the secondary line (32), in each case in the direction from an inlet to an outlet of the exhaust system (10),
- a main catalytic converter (40) which is arranged downstream of the parallel exhaust lines (30, 32),
**characterized in that** a junction region (34) of the secondary line (32) with a common exhaust line (38) has at least one junction opening (36) which is configured in such a way that in a position of the actuator means (46) in which the main line (30) and the secondary line (32) are opened, at least a major portion of the exhaust gas flow flows through the main line (30).

2. Exhaust system (10) according to Claim 1, **characterized in that** the exhaust gas catalytic converter (44) which is arranged in the main line (30) is a three-way catalytic converter.

3. Exhaust system (10) according to one of the preceding claims, **characterized in that** the main catalytic converter (40) is a three-way catalytic converter.

4. Exhaust system (10) according to one of the preceding claims, **characterized in that** a sum of the conversion capacities of the main catalytic converter (40) and of the exhaust gas catalytic converter (44) arranged in the main line (30) and of a pre-catalytic converter (16) which is possibly provided is configured in such a way that it satisfies a predetermined total conversion performance, in particular in the entire engine characteristic diagram.

5. Exhaust system (10) according to one of the preceding claims, **characterized in that** the exhaust gas catalytic converter (44) which is arranged in the main line (30) has a metal catalytic-converter carrier whose walls have through-openings, in particular punched-out and/or notched through-openings.

6. Exhaust system (10) according to one of the preceding claims, **characterized in that** the parallel exhaust lines (30, 32) have a design in which one of the parallel exhaust lines (30, 32) at least partially surrounds the other of the parallel exhaust lines (30, 32), in particular have a concentric design.

7. Exhaust system (10) according to Claim 6, **characterized in that** the secondary line (32) which accommodates the HC adsorber (42) surrounds the main line (30).

8. Exhaust system (10) according to one of the preceding claims, **characterized in that** the actuator means (46) for selectively conducting the exhaust gas flow into the main line (30) and/or into the secondary line (32) has intermediate positions in addition to a closed position and an opened position.

9. Exhaust system (10) according to one of the preceding claims, **characterized in that** the actuator means (46) is provided only in the region of the main line (30), and in a closed position it closes the main line (30) and in an opened position it opens the main line (30).

10. Exhaust system (10) according to one of the preceding claims, **characterized in that** a cell number of the exhaust gas catalytic converter (44) which is arranged in the main line (30) is less than a cell number of the HC adsorber (42).

11. Exhaust system (10) according to one of the preceding claims, **characterized in that** the parallel exhaust lines (30, 32) with the HC adsorber (42) and the exhaust gas catalytic converter (44) as well as the downstream main catalytic converter (40) are arranged in a common catalytic converter housing (26).

12. Vehicle having an internal combustion engine and an exhaust system (10) connected thereto according to one of Claims 1 to 11.

## Revendications

1. Installation de gaz d'échappement (10) pour un moteur à combustion interne, comprenant
- une voie d'échappement qui présente au moins en partie deux conduits de gaz d'échappement parallèles (30, 32), à savoir un conduit principal (30) ainsi qu'un conduit secondaire (32),
- un adsorbeur d'hydrocarbures (42) disposé dans le conduit secondaire (32) pour l'adsorption réversible des hydrocarbures non brûlés (HC),
- un catalyseur de gaz d'échappement (44) disposé dans le conduit principal (30) pour convertir au moins un composant de gaz d'échappement ;
- un moyen de commande (46) pour guider de manière sélective un flux de gaz d'échappement à travers le conduit principal (30) et/ou à travers le conduit secondaire (32) à chaque fois dans la direction d'une entrée vers une sortie de l'installation d'échappement (10),
- un catalyseur principal (40) disposé en aval des conduits de gaz d'échappement parallèles (30, 32),
**caractérisée en ce qu'**une région d'embouchure (34) du conduit secondaire (32) dans un conduit de gaz d'échappement commun (38) présente au moins une ouverture d'embouchure (36), qui est conçue de telle sorte que, dans une position du moyen de commande (46) dans laquelle le conduit principal (30) et le conduit secondaire (32) sont ouverts, au moins une proportion majeure du flux de gaz d'échappement s'écoule à travers le conduit principal (30).

2. Installation de gaz d'échappement (10) selon la revendication 1, **caractérisée en ce que** le catalyseur de gaz d'échappement (44) disposé dans le conduit principal (30) est un catalyseur à trois voies.

3. Installation de gaz d'échappement (10) selon l'une quelconque des revendications précédentes, **caractérisée en ce que** le catalyseur principal (40) est un catalyseur à trois voies.

4. Installation de gaz d'échappement (10) selon l'une quelconque des revendications précédentes, **caractérisée en ce qu'**une somme des capacités de conversion du catalyseur principal (40) et du catalyseur de gaz d'échappement (44) disposé dans le conduit principal (30) ainsi que d'un pré-catalyseur (16) éventuellement prévu est définie de telle sorte qu'elle satisfasse à une puissance de conversion totale prédéterminée, en particulier dans le champ caractéristique total du moteur.

5. Installation de gaz d'échappement (10) selon l'une quelconque des revendications précédentes, **caractérisée en ce que** le catalyseur de gaz d'échappement (44) disposé dans le conduit principal (30) présente un support de catalyseur en métal dont les parois présentent des ouvertures de passage, en particulier des ouvertures de passage estampées et/ou encochées.

6. Installation de gaz d'échappement (10) selon l'une quelconque des revendications précédentes, **caractérisée en ce que** les conduits de gaz d'échappement parallèles (30, 32) présentent une construction dans laquelle l'un des conduits de gaz d'échappement parallèles (30, 32) entoure au moins en partie l'autre des conduits de gaz d'échappement parallèles (30, 32), en particulier une construction concentrique.

7. Installation de gaz d'échappement (10) selon la revendication 6, **caractérisée en ce que** le conduit secondaire (32) abritant l'adsorbeur d'hydrocarbures (42) entoure le conduit principal (30).

8. Installation de gaz d'échappement (10) selon l'une quelconque des revendications précédentes, **caractérisée en ce que** le moyen de commande (46) pour conduire de manière sélective le flux de gaz d'échappement dans le conduit principal (30) et/ou dans le conduit secondaire (32) présente, en plus d'une position fermée et d'une position ouverte, des positions intermédiaires.

9. Installation de gaz d'échappement (10) selon l'une quelconque des revendications précédentes, **caractérisée en ce que** le moyen de commande (46) est prévu seulement dans la région du conduit principal (30) et, dans une position fermée, ferme le conduit principal (30), et, dans une position ouverte, ouvre le conduit principal (30).

10. Installation de gaz d'échappement (10) selon l'une quelconque des revendications précédentes, **caractérisée en ce qu'**un nombre de cellules du catalyseur de gaz d'échappement (44) disposé dans le conduit principal (30) est inférieur à un nombre de cellules de l'adsorbeur d'hydrocarbures (42).

11. Installation de gaz d'échappement (10) selon l'une quelconque des revendications précédentes, **caractérisée en ce que** les conduits de gaz d'échappement parallèles (30, 32) sont disposés avec l'adsorbeur d'hydrocarbures (42) et le catalyseur de gaz d'échappement (44) ainsi que le catalyseur principal monté en aval (40), dans un boîtier de catalyseur commun (26).

12. Véhicule comprenant un moteur à combustion interne et une installation de gaz d'échappement (10) raccordée à celui-ci selon l'une quelconque des revendications 1 à 11.
